# EUROPÄISCHE PATENTSCHRIFT

(11) **EP 3 332 136 B1**
(45) Veröffentlichungstag und Bekanntmachung des Hinweises auf die Patenterteilung: **23.10.2019**
(21) Anmeldenummer: 16763435.1
(22) Anmeldetag: 03.08.2016
(51) Int. Cl.: F16C 43/06, F16C 43/08, F16C 19/36, F16C 33/36, F16C 33/58, F16C 19/22, F16C 33/46, F16C 33/49

(54) **VERFAHREN UND VORRICHTUNG ZUR HERSTELLUNG EINES SCHRÄGROLLENLAGERS**
METHOD AND DEVICE FOR PRODUCING AN ANGULAR CONTACT ROLLER BEARING
PROCÉDÉ ET DISPOSITIF POUR LA FABRICATION D'UN ROULEMENT À ROULEAUX À CONTACT OBLIQUE

(30) Priorität: 04.08.2015 DE 102015214847
(43) Veröffentlichungstag der Anmeldung: 13.06.2018
(73) Patentinhaber: Schaeffler Technologies AG & Co. KG, 91074 Herzogenaurach (DE)
(72) Erfinder: HOFMANN, Heinrich, 97422 Schweinfurt (DE); EIDLOTH, Rainer, 91074 Herzogenaurach (DE); RUMPEL, Reinhard, 97228 Rottendorf (DE); GEIGER, Ernst, 91352 Hallerndorf (DE)
(86) Internationale Anmeldenummer: PCT/DE2016/200355
(87) Internationale Veröffentlichungsnummer: WO 2017/020907

(56) Entgegenhaltungen:
- DE-A1- 2 420 210
- DE-A1- 2 651 827
- DE-A1- 3 004 672
- DE-C- 521 398
- DE-U1- 8 713 057
- JP-U- S58 130 120
- NL-A- 7 015 511
- US-A- 1 397 142
- US-A- 2 042 417

## Beschreibung

### Gebiet der Erfindung

Die Erfindung betrifft ein Verfahren zur Herstellung eines insbesondere einreihigen Schrägrollenlagers sowie eine Vorrichtung zur Durchführung des Verfahrens. Besagtes Schrägrollenlager ist vorteilhaft zur Lagerung der Kurbelwelle in einem Kraftfahrzeug-Verbrennungsmotor anwendbar.

### Hintergrund der Erfindung

Der für die Lagerung der Kurbelwelle in Kraftfahrzeug-Verbrennungsmotoren am häufigsten verwendete Lagertyp ist das einreihige Rillenkugellager, da dieses sich durch eine gleichermaßen hohe radiale und axiale Tragfähigkeit auszeichnet und wegen seiner geringen Reibung die höchsten Drehzahlgrenzen aller Lagerarten aufweist. Dieses Rillenkugellager besteht in bekannter Weise aus einem äußeren Lagerring und einem inneren Lagerring sowie aus einer Vielzahl zwischen den Lagerringen angeordneter Lagerkugeln, die in in die Innenseite des äußeren Lagerrings und in die Außenseite des inneren Lagerrings eingearbeitete rillenförmigen Laufbahnen abrollen und durch einen Lagerkäfig in gleichmäßigen Abständen zueinander geführt werden. Das Einsetzten der Lagerkugeln in das Rillenkugellager erfolgt dabei zumeist durch das mit der DE 168 499 A1 bekannt gewordene Exzentermontageverfahren, bei dem die beiden Lagerringe exzentrisch zueinander angeordnet werden und der dadurch entstehende freie Raum zwischen den Lagerringen mit den Lagerkugelnh befült wird, anschließend die Lagerringe unter Ausnutzung ihrer Elastizität in eine konzentrische Stellung zueinander gebracht werden und nach einer gleichmäßigen Umfangsverteilung der Lagerkugeln der Lagerkäfig eingesetzt wird.

In der Praxis hat es sich jedoch erwiesen, dass derartigen Rillenkugellagern aufgrund der geringen maximal einbaubaren Anzahl von Lagerkugeln, die von den Abmessungen des inneren und des äußeren Lagerrings sowie vom Durchmesser der Lagerkugeln abhängig ist, vor allem in Bezug auf die radiale Tragfähigkeit des Lagers immer gewisse Grenzen gesetzt sind. In der Vergangenheit wurden daher eine Vielzahl von Lösungen, wie beispielsweise eine in den sich gegenüberliegenden Borden der Laufbahnen des äußeren und des inneren Lagerrings angeordnete unverschlossene Einfüllöffnung gemäß DE 151 483 A1 oder eine ähnlich ausgebildete verschließbare Einfüllöffnung gemäß DE 24 07 477 A1, vorgeschlagen, mit denen durch eine Erhöhung der Anzahl der Lagerkugeln eine Erhöhung der radialen Tragfähigkeit von Rillenkugellagern erreicht werden sollte, die sich aber aufgrund der aus solchen Einfüllöffnungen resultierenden Nachteile in der Praxis nicht durchsetzen konnten.

Eine andere naheliegende Möglichkeit, die Tragfähigkeit der Lagerung der Kurbelwelle in einem Kraftfahrzeug-Verbrennungsmotor zu erhöhen, wäre der Ersatz des bisher verwendeten Rillenkugellagers durch ein Zylinderrollenlager vom Typ NUP, wie es beispielsweise aus dem Katalog "Wälzlager" der Anmelderin vom Oktober 2008 auf den Seiten 393 und 396 bekannt ist. Dieses Zylinderrollenlager weist sowohl am inneren Lagerring als auch am äußeren Lagerring zwei seitliche Borde auf und ist zur Aufnahme hoher Radiallasten sowie von Axiallasten in beide Richtungen geeignet. Derartige Zylinderrollenlager weisen jedoch durch den hohen Anteil spanender Bearbeitung, insbesondere bei der Laufbahnherstellung und bei der Bordbearbeitung, sehr hohe Fertigungskosten auf und wären zudem in ihrer Tragfähigkeit wiederum überdimensioniert, so dass diese für den Einsatz als Festlager in Kraftfahrzeug-Schaltgetrieben letztendlich ungeeignet sind.

Ein weiterer, zur Lagerung der Kurbelwelle in einem Kraftfahrzeug-Verbrennungsmotor geeigneter und für die vorliegende Erfindung den nächstliegenden Stand der Technik bildender Lagertyp, dessen Aufnahmefähigkeit von Radialkräften und von Axialkräften in beide Richtungen größer als die von Rillenkugellagern ist, ist durch die Druckschriften DE 6 917 609 U und CH 463 886 A bekannt geworden. In diesen Druckschriften wird jeweils ein Schrägrollenlager offenbart, welches im Wesentlichen aus einem inneren Lagerring mit einer an dessen äußerer Mantelfläche schräg zur radialen Lagerachse angeordneten inneren Laufbahn und einem diese Laufbahn an ihrem kleinsten Durchmesser begrenzenden Bord, aus einem äußeren Lagerring mit einer an dessen innerer Mantelfläche ebenfalls schräg zur radialen Lagerachse angeordneten äußeren Laufbahn und einem diese Laufbahn an ihrem größten Durchmesser begrenzenden Bord sowie aus einer Vielzahl zwischen den Lagerringen angeordneter und auf deren Laufbahnen abrollender Rollenwälzkörper besteht, die in Umfangsrichtung durch einen Lagerkäfig in gleichmäßigen Abständen zueinander gehalten werden. Zur Ermöglichung des Einsetzens der als Kegelrollen ausgebildeten Wälzkörper in den jeweils als Taschen- bzw. als Fensterkäfig ausgebildeten Lagerkäfig ist bei dem Schrägrollenlager gemäß DE 6 917 609 U der Bord am inneren Lagerring und bei dem Schrägrollenlager gemäß CH 463 886 A der Bord am äußeren Lagerring als separates Bauteil ausgebildet, der nach der Lagermontage am inneren bzw. äußeren Lagerring befestigt wird. Dies erfolgt bei dem Schrägrollenlager gemäß DE 6 917 609 U durch einen gesonderten geschlitzten, im Querschnitt U-förmigen Ring, dessen radiale Schenkel in entsprechende Nuten im Bord und im inneren Lagerring eingreifen, und bei dem Schrägrollenlager gemäß CH 463 886 A durch einen an die Unterseite des Bordes angeformten umlaufenden Bund, der in den äußeren Lagerring eingepresst wird. Ein weiteres Schrägrollenlager ist aus der NL 7 015 511 A bekannt.

Bei derartigen Schrägrollenlagern sind zwar dadurch, dass nur noch einer der Lagerringe mit nur noch einem seitlichen Bord einteilig ausgebildet ist, der Anteil der spanenden Bearbeitung bei der Laufbahnherstellung und bei der Bordbearbeitung und damit auch die Gesamtkosten für die Lagerfertigung wesentlich geringer als bei dem vorbeschriebenen Zylinderrollenlager, dennoch wirkt sich bei diesen Schrägrollenlagern die Ausbildung des Bordes am jeweils anderen Lagerring als separate Bordscheibe, deren zusätzliche Montage an diesem Lagerring sowie die erforderliche Präzisionsfertigung der Anlageflächen an diesen und dem zugehörigen Lagerring ungünstig auf deren Herstellungskosten aus. Außerdem besteht bei diesen Schrägrollenlagern die Gefahr, dass die Befestigung der separaten Bordscheibe nicht ausreichend ist, um auch hohen radialen oder axialen Belastungsspitzen standzuhalten, so dass sich die Bordscheibe im Lagerbetrieb lösen kann und es letztendlich zum Lagerausfall kommt.

### Aufgabe der Erfindung

Ausgehend von den dargelegten Nachteilen der Lösungen des bekannten Standes der Technik liegt der Erfindung deshalb die Aufgabe zu Grunde, eine kostengünstige Herstellung eines insbesondere einreihigen Schrägrollenlagers mit jeweils einseitig laufbahnbegrenzenden Borden zu ermöglichen.

### Beschreibung der Erfindung

Erfindungsgemäß wird diese Aufgabe durch ein Verfahren mit den Merkmalen gemäß Patentanspruch 1 gelöst. Ferner wird die Aufgabe mit einer Vorrichtung gemäß Patentanspruch 13 und eine Vorrichtung gemäß Patentanspruch 14 gelöst. Vorteilhafte Weiterbildungen der Erfindung sind den jeweils abhängigen Patentansprüchen zu entnehmen.

Das erfindungsgemäße Verfahren dient zur Herstellung eines Schrägrolieniagers dessen äußere Mantelfläche des inneren Lagerrings und dessen innere Mantelfläche des äußeren Lagerrings jeweils außerhalb der Laufbahnen zumindest abschnittsweise koaxial zur Lagerrotationsachse verlaufend zylindrisch ausgebildet sind. Die Laufbahnen beider Lagerringe sind jeweils kegelförmig in die vor diesem Bearbeitungsschritt zylindrischen Mantelflächen eingearbeitet, Die hierbei entstehenden und die Laufbahnen jeweils einseitig begrenzenden Borde sind dadurch jeweils einteilig mit den Lagerringen ausgebildet sind.

Bevorzugt ist vorgesehen, dass die Rollenwälzkörper bevorzugt als Kegelrollen ausgebildet werden, die einen Kegelwinkel im Bereich von 1° bis 4° aufweisen und in einem Hüllkreiswinkel zwischen 3° bis 7° auf ihren Laufbahnen abrollen. Bei Anwendung des so ausgebildeten Radialwälzlagers zur Lagerung der Kurbelwelle in einem Kraftfahrzeug-Verbrennungsmotor haben sich dabei aufgrund der auftretenden Radial- und Axiallasten ein Kegelwinkel von 1,5° bis 2,5°, bevorzugt 2°, und ein Hüllkreiswinkel von 5,5° bis 6,5°, bevorzugt 6°, als besonders geeignet erwiesen. Es ist jedoch anzumerken, dass das erfindungsgemäße Verfahren nicht auf eine Herstellung von Kegelrollenlager beschränkt sein soll, da in gleicher Weise auch andere Rollenlager mit schräg zur Lagermittelachse angeordneten Rollenachsen derart montiert werden können. So können anstelle der beispielhaft angeführten Kegelrollen auch Zylinderrollen oder Nadeln oder Rollen mit sphärischen Mantelflächen, wie Pendel- oder Tonnenrollen, verwendet werden.

Ferner ist es vorteilhaft, den Spalt zwischen der äußeren Mantelfläche des inneren Lagerrings und der inneren Mantelfläche des äußeren Lagerrings so zu bemessen, dass das Zweifache seines Maßes größer als der größte Durchmesser der Rollenwalzkörper ist. Eine solche Dimensionierung des Spaltes zwischen dem inneren und dem äußeren Lagerring ist notwendig, um das Einsetzen der Rollenwälzkörper in das Schrägrollenlager nach dem hier beschriebenen Montageverfahren zu ermöglichen.

Darüber hinaus ist es vorteilhaft, sowohl den die Laufbahn im inneren Lagerring begrenzenden Bord als auch den die Laufbahn im äußeren Lagerring begrenzende Bord mit einer gleichen Mindesthöhe von 18% bis 22%, bevorzugt ca. 20%, des größten Durchmessers der Rollenwälzkörper einzuarbeiten. Durch eine solche Ausbildung der Borde und der damit einhergehenden Laufbahntiefe ist gewährleistet, dass im Lagerbetrieb auftretende hohe Axialkräfte in die eine Richtung mit möglichst geringer Bordreibung aufgenommen werden können, während geringere Axialkräfte in die andere Richtung über die schrägen Laufbahnen aufgenommen werden.

Eine zweckmäßige Weiterbildung des erfindungsgemäßen Verfahrens sieht vor, nach der Montage der Rollenwälzkörper einen aus einem Käfigring sowie aus einer Vielzahl von axialen Käfigstegen bestehenden Kammkäfig in das Schrägrollenlager einzusetzen. Dieser Lagerkäfig weist an seinen Käfigstegen zusätzlich mehrere gleichmäßig umfangsverteilte Raststege auf, durch die der Lagerkäfig entweder an der Innenfläche des Bordes am äußeren Lagerring oder an der Innenfläche des Bordes am inneren Lagerring axial lagefixierbar ist Diese Raststege sind analog zu den Rollenachsen der Rollenwälzkörper geneigt zur Lagermittelachse an die Käfigstege angeformt und werden beim Einsetzen des Lagerkäfigs in das Schrägrollenlager zunächst solange elastisch in Richtung der Käfigstege verformt, bis diese mit ihren freien Enden beim Einsetzen des Lagerkäfigs von der großen Durchmesserseite der Kegelrollen her hinter den Bord am äußeren Lagerring und beim Einsetzen des Lagerkäfigs von der kleinen Durchmesserseite der Kegelrollen her hinter dem Bord am inneren Lagerring einrasten. Dadurch wird der durch das Anliegen des Lagerkäfigs an den einen Stirnseiten der Rollenwälzkörper bisher nur in die eine Axialrichtung lagefixierte Lagerkäfig auch in die andere Axialrichtung lagefixiert. Auch hier ist jedoch zu bemerken, dass die Verwendung eines Kammkäfigs als Lagerkäfig nicht auf diese Käfigart beschränkt ist, da es auch möglich ist, als Lagerkäfig einen zweiteiligen Blechnietkäfig zu verwenden.

Ferner ist es vorteilhaft, zwei Elastomerdichtscheiben mit Metallarmierung axial beidseitig der Rollenwälzkörper in umlaufende Befestigungsnuten in der inneren Mantelfläche des äußeren Lagerrings einzusetzen und so das Schrägrollenlager gegen Verschmutzungen von außen sowie gegen den Austritt von ggf. in den Lagerinnenraum eingefüllten Schmierstoff abzudichten. Diese bei anderen Wälzlagerarten an sich bekannte Ausbildung ist deshalb bemerkenswert, da bei den eingangs als nächstliegender Stand der Technik beschriebenen Schrägrollenlagern durch das Fehlen geeigneter Befestigungsflächen sowie geeigneter Dichtflächen für solche Elastomerdichtscheiben keine solche Abdichtung möglich ist. Durch die ebene Ausbildung der äußeren Mantelfläche des inneren Lagerrings und der inneren Mantelfläche des äußeren Lagerrings sind bei dem erfindungsgemäß ausgebildeten Schrägrollenlager die notwendigen Befestigungs- und Dichtflächen jedoch vorhanden.

Erfindungsgemäß wird die Aufgabe durch ein Verfahren zur Herstellung eines Schrägrollenlagers nach Patentanspruch 1 gelöst, welches folgende Schritte umfasst:
- Kegelförmiges Einarbeiten einer inneren Laufbahn (4) in einen zylindrische Abschnitt einer äußeren Mantelfläche (3) eines inneren Lagerringes (2), so dass die innere Laufbahn (4) zur Lagerrotationsachse (A_{L}) geneigt und an einem Ende durch einen Bord (5) begrenzt ist,
- Kegelförmiges Einarbeiten einer äußeren Laufbahn (8) in einen zylindrische Abschnitt einer inneren Mantelfläche (7) eines äußeren Lagerringes (6), so dass die äußere Laufbahn (8) zur Lagerrotationsachse (A_{L}) geneigt und an einem Ende durch einen Bord (9) begrenzt ist,
- Montage des inneren und äußeren Lagerringes (2,6) sowie einer Vielzahl auf deren Laufbahnen abrollender Rollenwälzkörper (10) nach einem an sich als Montageverfahren für Rillenkugellager bekannten Exzentermontagerverfahren.

Bei einer ersten Variante dieses Exzentermontageverfahrens wird dabei gemäß den Ansprüchen 2, 3 und 4 in einem ersten Schritt der innere Lagerring mit seiner mit dem Bord ausgebildeten Stirnseite auf eine horizontale Montageebene mit einer konvexen sichelförmigen Hilfsrampe derart aufgelegt, dass dieser mit seinem Bord an der Innendurchrnesserseite der Hilfsrampe anliegt. Danach wird in einem zweiten Schritt der äußere Lagerring mit seiner mit dem Bord ausgebildeten Stirnseite nach oben derart exzentrisch zum inneren Lagerring angeordnet, dass einerseits die Hilfsrampe zwischen den Lagerringen angeordnet ist und andererseits um 180° zur Mitte der Hilfsrampe versetzt die Lagerringe aneinander anliegen. Als dritter Schritt wird dann der entstandene sichelförmige Freiraum zwischen dem äußeren Lagerring und dem inneren Lagerring mit den als Kegelrollen ausgebildeten Rollenwälzkörpern derart befüllt, dass deren kleinere Stirnseiten auf der Schrägseite der Hilfsrampe aufliegen.

Eine zweite Variante des Exzentermontageverfahrens unterscheidet sich von der ersten Variante gemäß den Ansprüchen 5, 6 und 7 dadurch, dass in einem ersten Schritt der äußere Lagerring mit seiner mit dem Bord ausgebildeten Stirnseite auf eine horizontale Montageebene mit einer konvexen sichelförmigen Hilfsrampe derart aufgelegt wird, dass dieser mit seinem Bord an der Außendurchmesserseite der Hilfsrampe anliegt. Danach wird in einem zweiten Schritt der innere Lagerring mit seiner mit dem Bord ausgebildeten Stirnseite nach oben derart exzentrisch zum äußeren Lagerring angeordnet, dass einerseits die Hilfsrampe zwischen den Lagerringen angeordnet ist und andererseits um 180° zur Mitte der Hilfsrampe versetzt die Lagerringe aneinander anliegen. Der dritte Schritt dieser Variante besteht dann wieder darin, dass der entstandene sichelförmige Freiraum zwischen dem inneren Lagerring und dem äußeren Lagerring mit den als Kegelrollen ausgebildeten Rollenwälzkörpern derart befüllt wird, dass dabei deren größere Stirnseiten auf der Schrägseite der Hilfsrampe aufliegen.

Unabhängig von den beiden Varianten des Exzentermontageverfahrens wird dann nach Anspruch 8 in einem vierten Schritt der äußere Lagerring in Höhe des Berührungspunktes mit dem inneren Lagerring sowie in Höhe eines dem Berührungspunkt um 180° versetzten Punktes an dessen Außenmantelfläche derart eingespannt, dass der äußere Lagerring innerhalb seiner Elastizitätsgrenze geringfügig ovalisiert wird. Anschließend werden nach Anspruch 9 in einem fünften Schritt der innere Lagerring in eine koaxiale Lage zum äußeren Lagerring verschoben und die Rollenwälzkörper in ihren Laufbahnen in den Lagerringen unter Aufhebung der Ovalisierung des äußeren Lagerrings gleichmäßig umfangsverteilt.

Bei Anwendung der ersten Variante des erfindungsgemäßen Exzentermontageverfahrens wird danach gemäß Anspruch 9 in einem sechsten Schritt der als Kammkäfig ausgebildete Lagerkäfig mit seinen Käfigstegen zwischen die Rollenwälzkörper von der Seite mit deren kleineren Stirnseiten her eingeführt und an der Innenfläche des Bordes am inneren Lagerring verrastet. Bei Anwendung der zweiten Variante des erfindungsgemäßen Exzentermontageverfahrens wird dagegen gemäß Anspruch 10 in einem sechsten Schritt der als Kammkäfig ausgebildete Lagerkäfig mit seinen Käfigstegen zwischen die Rollenwälzkörper von der Seite mit deren größeren Stirnseiten her eingeführt und an der Innenfläche des Bordes am äußeren Lagerrings verrastet.

Nach Anspruch 11 wird dann als Abschluss des erfindungsgemäßen Exzentermontageverfahrens in einem letzten Schritt noch der Lagerinnenraum mit Schmierstoff befüllt und die beiden Elastomerdichtscheiben in die umlaufenden Befestigungsnuten in der inneren Mantelfläche des äußeren Lagerrings eingesetzt.

Schließlich wird die gestellte Aufgabe bei einem Schrägrollenlager der zuvor beschriebenen Art auch noch durch zwei Varianten einer Vorrichtung zur Durchführung des beschriebenen Montageverfahrens gelöst.

Zur Durchführung der ersten Variante des erfindungsgemäßen Exzentermontageverfahrens wird es dabei gemäß Anspruch 12 vorgeschlagen, dass die mit ihrer Innendurchmesserseite am inneren Lagerring anliegende Hilfsrampe eine sich zum äußeren Lagerring hin mit dem Neigungswinkel der Laufbahn im inneren Lagerring verjüngende Schrägseite sowie eine maximale Rampenhöhe aufweist, die der Höhe des Bordes am inneren Lagerring entspricht. Zur Durchführung der zweiten Variante des erfindungsgemäßen Exzentermontageverfahrens wird es dagegen gemäß Anspruch 22 vorgeschlagen, dass die mit ihrer Außendurchmesserseite am äußeren Lagerring anliegende Hilfsrampe eine sich zum inneren Lagerring hin mit dem Neigungswinkel der Laufbahn im äußeren Lagerring verjüngende Schrägseite sowie eine maximale Rampenhöhe aufweist, die der Höhe des Bordes am äußeren Lagerring entspricht.

Zusammenfassend dienen das erfindungsgemäße Verfahren sowie die erfindungsgemäßen Vorrichtungen der Herstellung eines insbesondere einreihigen Schrägrollenlager, das gegenüber den aus dem Stand der Technik bekannten einreihigen Schrägrollenlagern den Vorteil aufweist, dass es trotz des mit dem Exzentermontageverfahren maximal erreichbaren Wälzkörperfüllgrades von ca. 60% eine höhere Tragfähigkeit als ein gleichartig montiertes einreihiges Rillenkugellager aufweist, da die verwendeten Rollenwälzkörper nicht mehr wie bei Lagerkugeln im Punktkontakt sondern im Linienkontakt zu ihren Laufbahnen stehen. Hinsichtlich der erreichbaren Tragfähigkeit reiht sich dabei ein erfindungsgemäß ausgebildetes Schrägrollenlager als komplett neuer Lagertyp [z. B. Baureihe ARU (Angular Roller Unit) 207 ≈ 40 kN] etwa in der Mitte zwischen der Tragfähigkeit eines einreihigen Rillenkugellagers [z, B, Baureihe 6207 = 25,5 kN] und der Tragfähigkeit eines einreihigen Zylinderrollenlagers [z. B. Baureihe NUP 207E ≈ 56 kN] ein. Darüber hinaus hält sich der Anteil der spanenden Bearbeitung bei der Herstellung und Bearbeitung der Laufbahnen und der Borde des erfindungsgemäßen Schrägrollenlagers durch die in die zylindrischen inneren und äußeren Mantelflächen beider Lagerringe einfach kegelförmig eingearbeiteten Laufbahnen in vertretbaren Kostengrenzen und es sind gleichzeitig durch die dabei entstehenden, einteilig mit den Lagerringen ausgebildeten Borde keine separaten Bordscheiben mehr notwendig. Im Zusammenhang mit dem Exzentermontageverfahren für die Rollenwälzkörper und mit dem verwendeten Kammkäfig zeichnet sich das erfindungsgemäße Schrägrollenlager somit insgesamt durch einen niedrigen Montageaufwand und damit durch geringe Gesamtkosten für die Lagerfertigung aus.

### Kurze Beschreibung der Zeichnungen

Eine bevorzugte Ausführungsform eines Schrägrollenlagers sowie zwei alternative Varianten des erfindungsgemäßen Verfahrens zu dessen Montage und zwei zugehörige Vorrichtungen zur Durchführung dieser Verfahrensvarianten werden nachfolgend unter Bezugnahme auf die beigefügten Zeichnungen näher erläutert. Dabei zeigen:
- Figur 1: eine vergrößerte Darstellung eines Querschnittes durch ein einreihiges Schrägrollenlager mit einteilig mit den Lagerringen ausgebildeten Borden;
- Figur 2a, 2b: eine Darstellung des ersten Schrittes der ersten Variante des erfindungsgemäßen Montageverfahrens in einer Draufsicht und einer Schnittansicht:
- Figur 3a, 3b: eine Darstellung des zweiten Schrittes der ersten Variante des erfindungsgemäßen Montageverfahrens in einer Draufsicht und einer Schnittansicht;
- Figur 4a, 4b: eine Darstellung des dritten Schrittes der ersten Variante des erfindungsgemäßen Montageverfahrens in einer Draufsicht und einer Schnittansicht;
- Figur 5a, 5b: eine Darstellung des ersten Schrittes der zweiten Variante des erfindungsgemäßen Montageverfahrens in einer Draufsicht und einer Schnittansicht;
- Figur 6a, 6b: eine Darstellung des zweiten Schrittes der zweiten Variante des erfindungsgemäßen Montageverfahrens in einer Draufsicht und einer Schnittansicht;
- Figur 7a, 7b: eine Darstellung des dritten Schrittes der zweiten Variante des erfindungsgemäßen Montageverfahrens in einer Draufsicht und einer Schnittansicht;
- Figur 8a, 8b: eine Darstellung des fünften Schrittes beider Varianten des erfindungsgemäßen Montageverfahrens in einer Draufsicht und einer Schnittansicht;
- Figur 9a, 9b: eine Darstellung des sechsten Schrittes beider Varianten des erfindungsgemäßen Montageverfahrens in einer Draufsicht und einer Schnittansicht;
- Figur 10a, 10b: eine Darstellung der Hilfsrampe zur Durchführung der ersten Variante des erfindungsgemäßen Montageverfahrens in einer Draufsicht und einer Schnittansicht;
- Figur 11a, 11b: eine Darstellung der Hilfsrampe zur Durchführung der zweiten Variante des erfindungsgemäßen Montageverfahrens in einer Draufsicht und einer Schnittansicht;

### Ausführliche Beschreibung der Zeichnungen

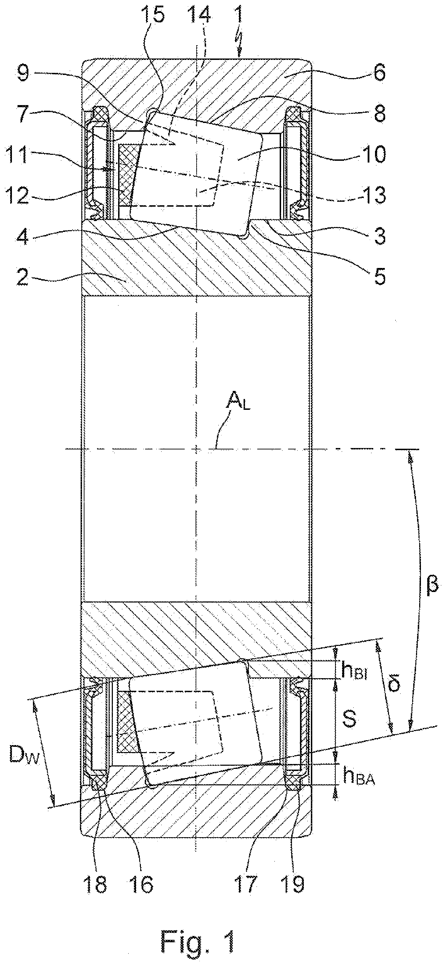

In Figur 1 ist ein Querschnitt eines einreihigen Schrägrollenlagers 1 dargestellt, welches beispielsweise als Ersatz des bisher verwendeten Rillenkugellagers zur Lagerung der Kurbelwelle in Kraftfahrzeug-Verbrennungsmotoren geeignet ist. Deutlich sichtbar besteht dieses Schrägrollenlager 1 aus einem inneren Lagerring 2 mit einer an dessen äußerer Mantelfläche 3 geneigt zur Lagerrotationsachse A_{L} angeordneten inneren Laufbahn 4, die an ihrem kleinsten Durchmesser durch einen Bord 5 begrenzt wird, sowie aus einem äußeren Lagerring 6 mit einer an dessen innerer Mantelfläche 7 ebenfalls geneigt zur Lagerrotationsachse A_{L} angeordneten äußeren Laufbahn 8, die an ihrem größten Durchmesser durch einen Bord 9 begrenzt wird. Zwischen den Lagerringen 2, 6 ist darüber hinaus eine Vielzahl auf deren Laufbahnen 4, 8 abrollender Rollenwälzkörper 10 angeordnet, die in Umfangsrichtung durch einen Lagerkäfig 11 in gleichmäßigen Abständen zueinander gehalten werden.

Desweiteren ist in Figur 1 zu sehen, dass die äußere Mantelfläche 3 des inneren Lagerrings 2 und die innere Mantelfläche 7 des äußeren Lagerrings 6 im Bereich außerhalb der Laufbahnen 4,8 koaxial zur Lagerrotationsachse A_{L} verlaufend zylindrisch ausgebildet und die Laufbahnen 4, 8 beider Lagerringe 2, 6 jeweils kegelförmig in die zylindrischen Mantelflächen 3, 7 eingearbeitet sind. Die dabei entstehenden und die Laufbahnen 4, 8 jeweils einseitig begrenzenden Borde 5, 9 sind dadurch jeweils einteilig mit den Lagerringen 2, 6 ausgebildet.

Ebenso ist aus Figur 1 ersichtlich, dass die Rollenwälzkörper 10 als Kegelrollen ausgebildet sind, die einen Kegelwinkel δ von bevorzugt 2° aufweisen und in einem Hüllkreiswinkel β von bevorzugt 6° auf ihren Laufbahnen 4, 8 abrollen. Außerdem ist der Spalt S zwischen der äußeren Mantelfläche 3 des inneren Lagerrings 2 und der inneren Mantelfläche 7 des äußeren Lagerrings 6 so bemessen, dass das zweifache seines Maßes größer als der größte Durchmesser D_{W} der Rollenwälzkörper 10 ist, um das Einsetzen der Rollenwälzkörper 10 in das Radialwälzlager 1 nach dem nachfolgend näher beschriebenen Montageverfahren zu ermöglichen. Zusätzlich weist sowohl der die Laufbahn 4 im inneren Lagerring 2 begrenzende Bord 5 als auch der die Laufbahn 8 im äußeren Lagerring 6 begrenzende Bord 9 eine gleiche Mindesthöhe h_{BI}, h_{BA} von ca. 20% des größten Durchmessers D_{W} der Rollenwälzkörper 10 auf, um im Lagerbetrieb auftretende hohe Axialkräfte in die eine Richtung mit möglichst geringer Bordreibung aufnehmen zu können.

Weiterhin ist in Figur 1 erkennbar, dass der Lagerkäfig 11 bevorzugt durch einen nach der Montage der Rollenwälzkörper 10 in das Radialwälzlager 1 einsetzbaren Kammkäfig gebildet wird. Der aus einem Käfigring 12 sowie aus einer Vielzahl von axialen Käfigstegen 13 bestehende Lagerkäfig 11 weist dabei an seinen verdeckt dargestellten Käfigstegen 13 mehrere ebenfalls verdeckt dargestellte, gleichmäßig umfangsverteilte und schräg zur Lagermittelachse A_{L} verlaufende Raststege 14 auf, durch die der Lagerkäfig 11 an der Innenfläche 15 des Bordes 9 am äußeren Lagerrings 6 axial lagefixierbar ist.

Schließlich ist in Figur 1 noch zu sehen, dass das Radialwälzlager 1 durch zwei axial beidseitig der Rollenwälzkörper 10 in umlaufende Befestigungsnuten 16, 17 in der inneren Mantelfläche 7 des äußeren Lagerrings 6 eingesetzte Elastomerdichtscheiben 18, 19 mit Metallarmierung gegen Verschmutzungen von Außen und gegen den Austritt von ggf. in den Lagerinnenraum 20 eingefüllten Schmierstoff abgedichtet ist. Diese bei anderen Wälzlagerarten an sich bekannte Ausbildung ist bei dem erfindungsgemäßen Radialwälzlager 1 im Gegensatz zu bekannten Schrägrollenlagern nur möglich, da dieses durch die radial ebene Ausbildung der äußeren Mantelfläche 3 des inneren Lagerrings 2 und der inneren Mantelfläche 7 des äußeren Lagerrings 6 geeignete Befestigungsflächen sowie geeignete Dichtflächen für solche Elastomerdichtscheiben 18, 19 aufweist.

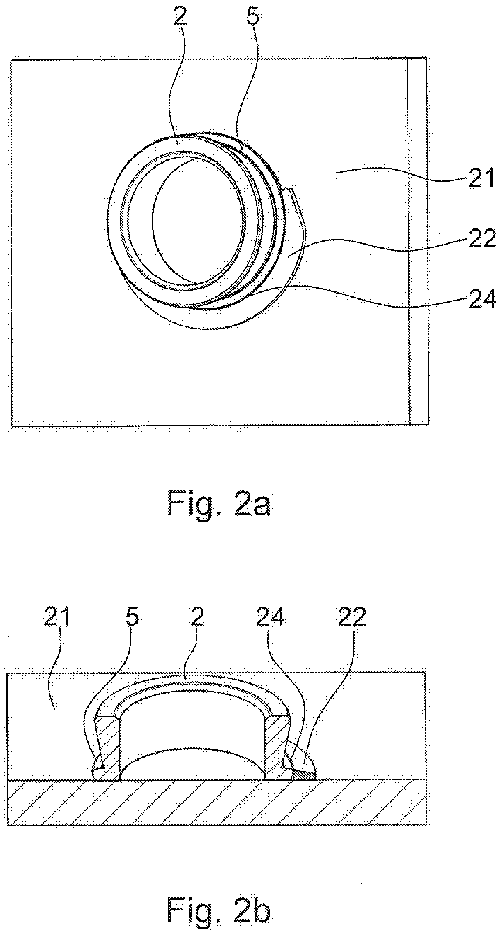

In den Figuren 2a, 2b, 3a, 3b und 4a, 4b sind desweiteren die ersten Schritte einer ersten Variante eines Montageverfahrens für das erfindungsgemäße Schrägrollenlager 1 schematisch dargestellt. Dieses Montageverfahren ist im Wesentlichen ein an sich als Montageverfahren für Rillenkugellager bekanntes, modifiziertes Exzentermontageverfahren, bei dem, wie in den Figuren 2a und 2b zu sehen ist, in einem ersten Schritt der innere Lagerring 2 mit seiner mit dem Bord 5 ausgebildeten Stirnseite auf eine horizontale Montageebene 21 mit einer konvexen sichelförmigen Hilfsrampe 22 derart aufgelegt wird, dass dieser mit seinem Bord 5 an der Innendurchmesserseite 24 der Hilfsrampe 22 anliegt.

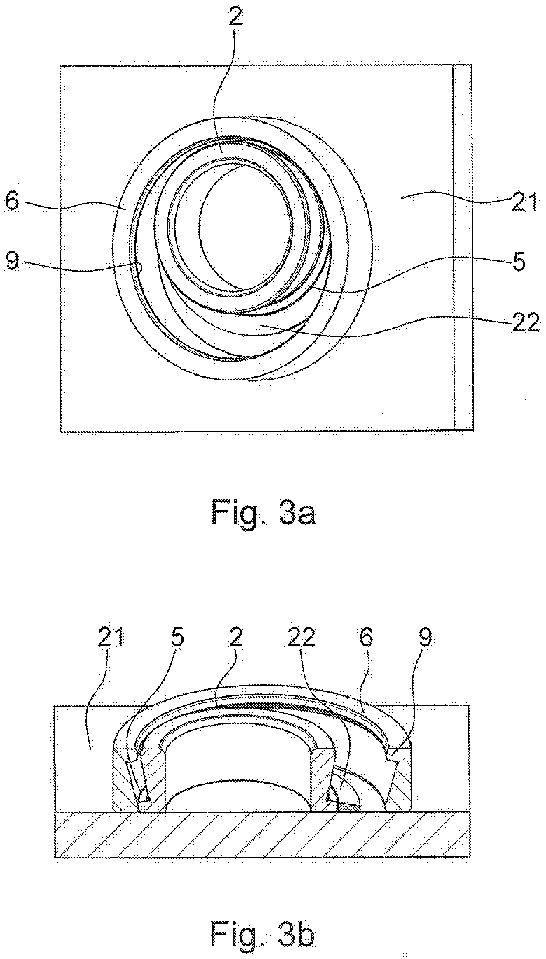

Danach wird in einem zweiten Schritt der äußere Lagerring 6 mit seiner mit dem Bord 9 ausgebildeten Stirnseite nach oben derart exzentrisch zum inneren Lagerring 2 angeordnet, dass, wie in den Figuren 3a und 3b deutlich sichtbar, einerseits die Hilfsrampe 22 zwischen den Lagerringen 2, 6 angeordnet ist und andererseits um 180° zur Mitte der Hilfsrampe 22 versetzt die Lagerringe 2, 6 aneinander anliegen.

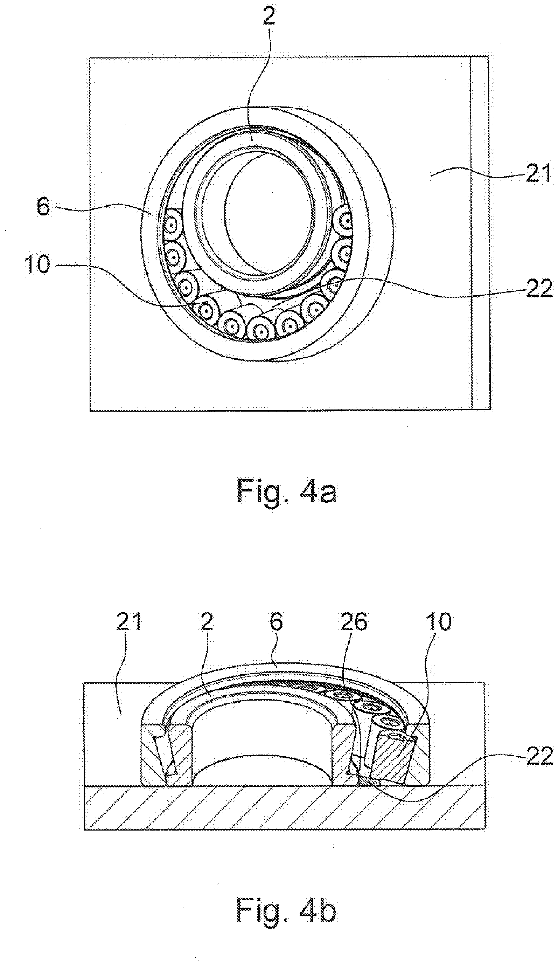

In einem dritten, in den Figuren 4a und 4b dargestellten Schritt wird dann der entstandene sichelförmige Freiraum zwischen dem äußeren Lagerring 6 und dem inneren Lagerring 2 mit den als Kegelrollen ausgebildeten Rollenwälzkörpern 10 derart befüllt, dass deren kleinere Stirnseiten auf der Schrägseite 26 der Hilfsrampe 22 aufliegen.

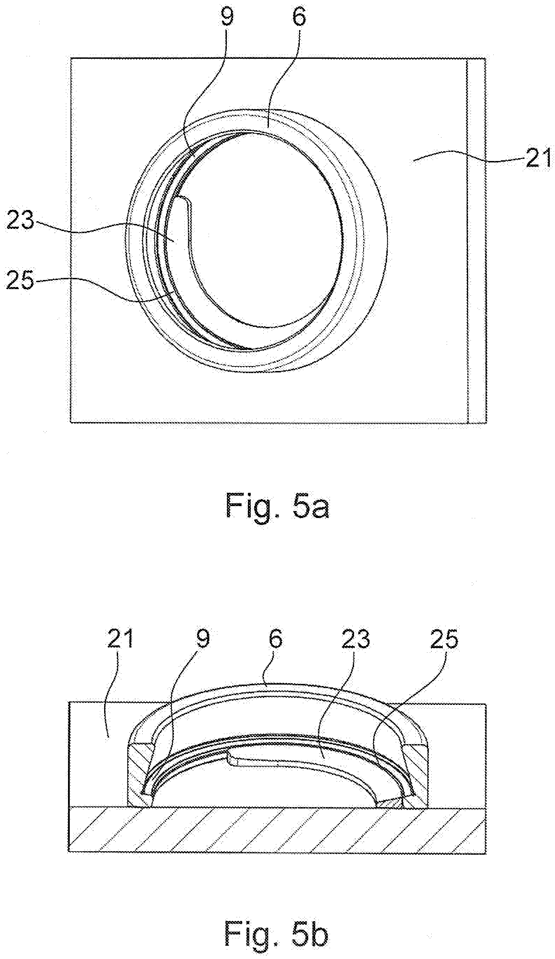

Die in den Figuren 5a, 5b, 6a, 6b und 7a, 7b dargestellte zweite Variante des Montageverfahrens für das erfindungsgemäße Schrägrollenlager ist ebenfalls ein modifiziertes Exzentermontageverfahren und unterscheidet sich von der ersten Variante dadurch, dass bei dem in den Figuren 5a und 5b abgebildeten ersten Schritt diesmal der äußere Lagerring 6 mit seiner mit dem Bord 9 ausgebildeten Stirnseite auf eine horizontale Montageebene 21 mit einer konvexen sichelförmigen Hilfsrampe 23 derart aufgelegt wird, dass dieser mit seinem Bord 9 an der Außendurchmesserseite 25 der Hilfsrampe 23 anliegt.

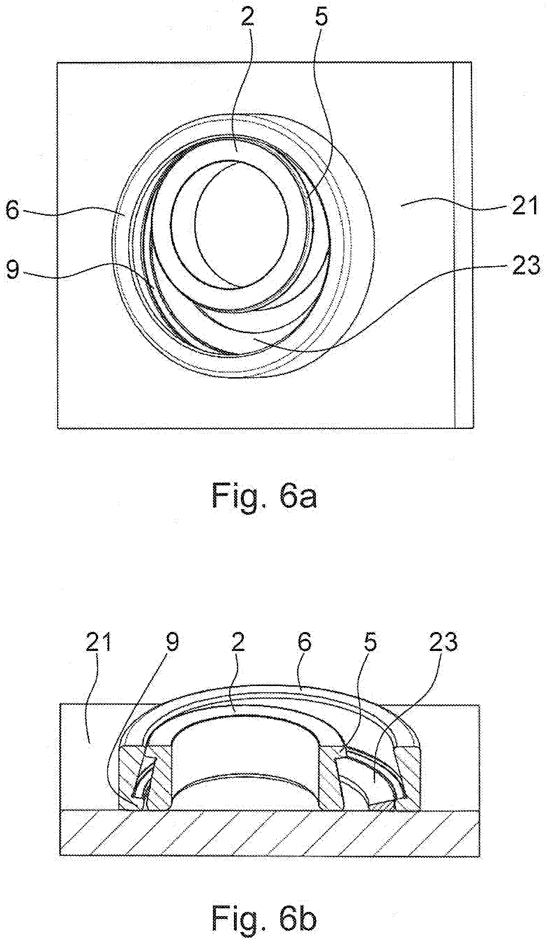

Ähnlich wie bei der ersten Variante wird danach in einem zweiten Schritt der innere Lagerring 2 mit seiner mit dem Bord 5 ausgebildeten Stirnseite nach oben derart exzentrisch zum äußeren Lagerring 6 angeordnet, dass, wie in den Figuren 6a und 6b erkennbar ist, einerseits die Hilfsrampe 23 zwischen den Lagerringen 2, 6 angeordnet ist und andererseits um 180° zur Mitte der Hilfsrampe 23 versetzt die Lagerringe 2, 6 aneinander anliegen.

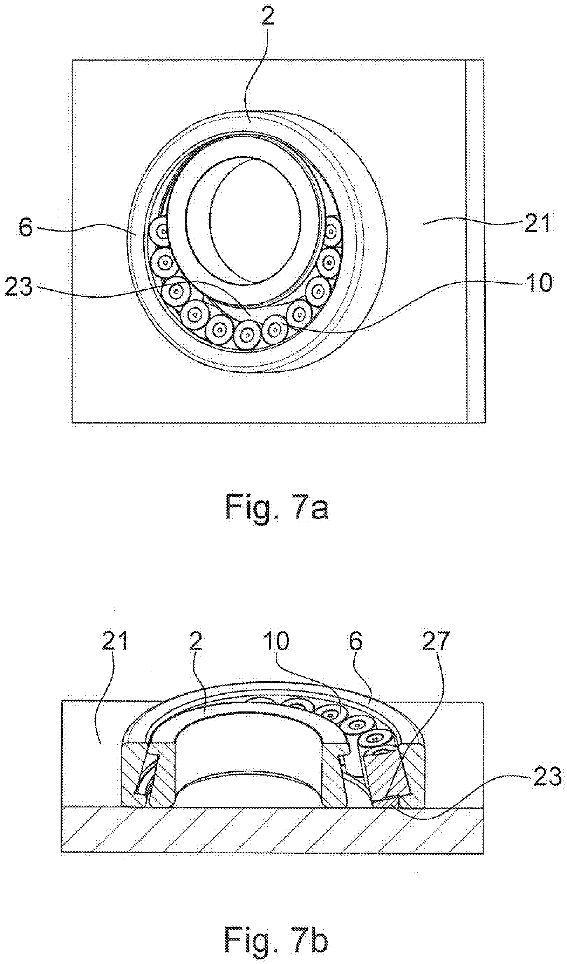

In einem dritten, in den Figuren 7a und 7b dargestellten Schritt wird dann auch hier der entstandene sichelförmige Freiraum zwischen dem inneren Lagerring 2 und dem äußeren Lagerring 6 mit den als Kegelrollen ausgebildeten Rollenwälzkörpern 10 befüllt, jedoch mit dem Unterschied, dass hierbei die größeren Stirnseiten der Rollenwälzkörper 10 auf der Schrägseite 27 der Hilfsrampe 23 aufliegen.

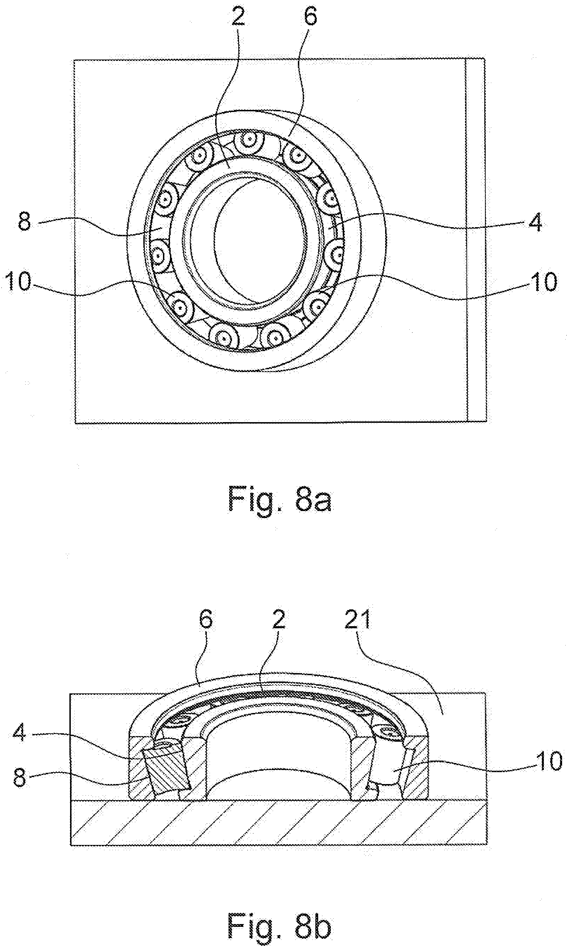

Unabhängig von den beiden Varianten des Exzentermontageverfahrens wird dann in einem vierten, in den Zeichnungen nicht näher dargestelltem Schritt der äußere Lagerring 3 in Höhe des Berührungspunktes mit dem inneren Lagerring 2 sowie in Höhe eines dem Berührungspunkt um 180° versetzten Punktes an dessen Außenmantelfläche derart eingespannt wird, dass der äußere Lagerring 3 innerhalb seiner Elastizitätsgrenze geringfügig ovalisiert wird. Anschließend wird, wie aus den Figuren 8a und 8b ersichtlich ist, in einem fünften Schritt der innere Lagerring 2 in eine koaxiale Lage zum äußeren Lagerring 3 verschoben, um die Rollenwälzkörper 10 in den Lagerringen 2, 6 unter Aufhebung der Övalisierung des äußeren Lagerrings 3 gleichmäßig umfangsverteilt in ihren Laufbahnen 4, 8 anzuordnen.

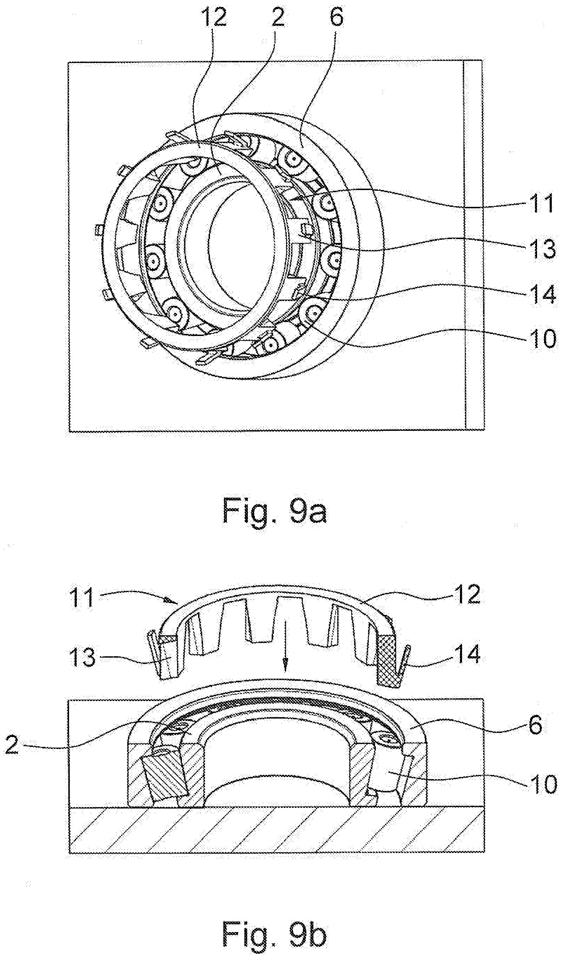

Bei Anwendung der ersten Variante des erfindungsgemäßen Exzentermontageverfahrens wird danach in einem sechsten, aus Gründen der Vereinfachung in den Zeichnungen jedoch nicht dargestellten Schritt der als Kammkäfig ausgebildete Lagerkäfig 11 mit seinen Käfigstegen 13 zwischen die Rollenwälzkörper 10 von der Seite mit deren kleineren Stirnseiten her eingeführt und mit seinen Rastnasen an der Innenfläche des Bordes 5 am inneren Lagerring 2 verrastet. Bei Anwendung der zweiten Variante des erfindungsgemäßen Exzentermontageverfahrens wird dagegen in einem sechsten Schritt der als Kammkäfig ausgebildete Lagerkäfig 11, wie in den Figuren 9a und 9b abgebildet, mit seinen Käfigstegen 13 zwischen die Rollenwälzkörper 10 von der Seite mit deren größeren Stirnseiten her eingeführt und, wie in Figur 1 gezeigt, mit seinen Raststegen 14 an der Innenfläche 15 des Bordes 9 am äußeren Lagerrings 6 verrastet. Abschließend wird dann noch der Lagerinnenraum 20 mit Schmierstoff befüllt und die beiden Elastomerdichtscheiben 18, 19 in die umlaufenden Befestigungsnuten 16, 17 in der inneren Mantelfläche 7 des äußeren Lagerrings 6 in der ebenfalls in Figur 1 dargestellten Art eingesetzt.

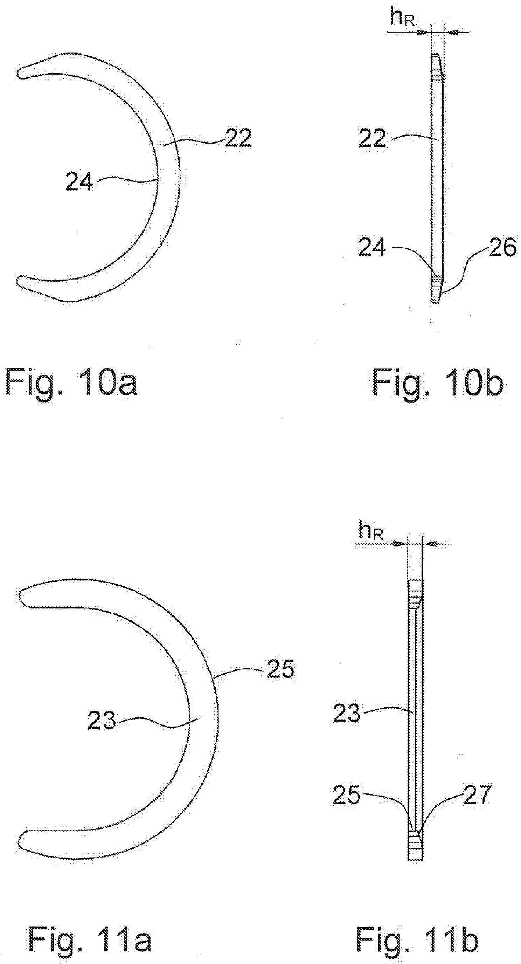

In den Figuren 10a, 10b und 11a, 11b sind schließlich noch die Hilfsrampen 22 und 23 zur Durchführung beider Varianten des erfindungsgemäßen Exzentermontageverfahrens dargestellt. Die für die erste Verfahrensvariante verwendete Hilfsrampe 22 zeichnet sich dabei dadurch aus, dass diese mit ihrer Innendurchmesserseite 24 am inneren Lagerring 6 anliegt und, wie in den Figuren 10a und 10b deutlich sichtbar ist, eine sich zum äußeren Lagerring 3 hin mit dem Neigungswinkel der Laufbahn 4 im inneren Lagerring 2 verjüngende Schrägseite 26 sowie eine maximale Rampenhöhe h_{R} aufweist, die der Bordhöhe h_{BI} am inneren Lagerring 2 entspricht.

Die für die zweite Verfahrensvariante verwendete Hilfsrampe 23 zeichnet sich dagegen dadurch aus, dass diese mit ihrer Außendurchmesserseite 25 am äußeren Lagerring 6 anliegt und, wie in den Figuren 11a und 11b zu sehen ist eine sich zum inneren Lagerring 2 hin mit dem Neigungswinkel der Laufbahn 8 im äußeren Lagerring 6 verjüngende Schrägseite 27 sowie eine maximale Rampenhöhe h_{R} aufweist, die der Bordhöhe I_{BA} am äußeren Lagerring 6 entspricht.

**Bezugszahlenliste**

| | | | |
|---|---|---|---|
| 1 | Schrägrolienlager | A_{L} | Lagerrotationsachse |
| 2 | innerer Lagerring | δ | Kegelwinkel |
| 3 | äußere Mantelfläche von 2 | β | Hüllkreiswinkel |
| 4 | innere Laufbahn in 2 | S | Spalt zwischen 3 und 7 |
| 5 | Bord an 4 | D_{W} | größter Durchmesser von 10 |
| 6 | äußerer Lagerring | h_{BI} | Bordhöhe an 2 |
| 7 | innere Mantelfläche von 6 | h_{BA} | Bordhöhe an 6 |
| 8 | äußere Laufbahn in 6 | h_{R} | Rampenhöhe |
| 9 | Bord an 8 | | |
| 10 | Rollenwälzkörper | | |
| 11 | Lagerkäfig | | |
| 12 | Käfigring von 11 | | |
| 13 | Käfigstege an 12 | | |
| 14 | Raststege an 13 | | |
| 15 | Innenfläche von 9 | | |
| 16 | Befestigungsnut in 7 | | |
| 17 | Befestigungsnut in 7 | | |
| 18 | Elastomerdichtscheibe | | |
| 19 | Elastomerdichtscheibe | | |
| 20 | Lagerinnenraum | | |
| 21 | Montageebene | | |
| 22 | Hilfsrampe | | |
| 23 | Hilfsrampe | | |
| 24 | Innendurchmesserseite von 22 | | |
| 25 | Außendurchmesserseite von 23 | | |
| 26 | Schrägseite an 22 | | |
| 27 | Schrägseite an 23 | | |

## Patentansprüche

1. Verfahren zur Herstellung eines Schrägrollenlagers (1) mit einseitig begrenzenden Borden (5, 9) mit folgenden Verfahrensschritten:
▪ Kegelförmiges Einarbeiten einer inneren Laufbahn (4) in einen Abschnitt einer koaxial zylindrisch zur Lagerrotationsachse (A_{L}) verlaufenden äußeren Mantelfläche (3) eines inneren Lagerringes (2), so dass die innere Laufbahn (4) zur Lagerrotationsachse (A_{L}) geneigt und an einem Ende durch einen Bord (5) begrenzt ist, während sie am anderen Ende bordlos an die äußere Mantelfläche (3) des inneren Lagerrings (2) angrenzt,
▪ Kegelförmiges Einarbeiten einer äußeren Laufbahn (8) in einen Abschnitt einer koaxial zylindrisch zur Lagerrotationsachse (A_{L}) verlaufenden inneren Mantelfläche (7) eines äußeren Lagerringes (6), so dass die äußere Laufbahn (8) zur Lagerrotationsachse (A_{L}) geneigt und an einem Ende durch einen Bord (9) begrenzt ist, während sie am anderen Ende bordlos an die innere Mantelfläche (7) des äußeren Lagerrings (6) angrenzt,
▪ Montage des inneren und äußeren Lagerringes (2, 6) sowie einer Vielzahl auf deren Laufbahnen (4, 8) abrollender Rollenwälzkörper (10) nach einem an sich als Montageverfahren für Rillenkugellager bekannten Exzentermontagerverfahren.

2. Verfahren nach Anspruch 1, **dadurch gekennzeichnet, dass** in einem ersten Schritt des Exzentermontageverfahrens der innere Lagerring (2) mit seiner mit dem Bord (5) ausgebildeten Stirnseite auf eine horizontale Montageebene (21) mit einer konvexen sichelförmigen Hilfsrampe (22) derart aufgelegt wird, dass dieser mit seinem Bord (5) an der Innendurchmesserseite (24) der Hilfsrampe (22) anliegt.

3. Verfahren nach Anspruch 2, **dadurch gekennzeichnet, dass** in einem zweiten Schritt des Exzentermontageverfahrens der äußere Lagerring (6) mit seiner mit dem Bord (9) ausgebildeten Stirnseite nach oben derart exzentrisch zum inneren Lagerring (2) angeordnet wird, dass einerseits die Hilfsrampe (22) zwischen den Lagerringen (2, 6) angeordnet ist und andererseits um 180° zur Mitte der Hilfsrampe (22) versetzt die Lagerringe (2, 6) aneinander anliegen.

4. Verfahren nach Anspruch 3, **dadurch gekennzeichnet, dass** in einem dritten Schritt des Exzentermontageverfahrens der entstandene sichelförmige Freiraum zwischen dem äußeren Lagerring (6) und dem inneren Lagerring (2) mit den als Kegelrollen ausgebildeten Rollenwälzkörpern (10) derart befüllt wird, dass deren kleinere Stirnseiten auf der Schrägseite (26) der Hilfsrampe (22) aufliegen.

5. Verfahren nach Anspruch 1, **dadurch gekennzeichnet, dass** in einem ersten Schritt des Exzentermontageverfahrens der äußere Lagerring (6) mit seiner mit dem Bord (9) ausgebildeten Stirnseite auf eine horizontale Montageebene (21) mit einer konvexen sichelförmigen Hilfsrampe (23) derart aufgelegt wird, dass dieser mit seinem Bord (9) an der Außendurchmesserseite (25) der Hilfsrampe (23) anliegt.

6. Verfahren nach Anspruch 5, **dadurch gekennzeichnet, dass** in einem zweiten Schritt des Exzentermontageverfahrens der innere Lagerring (2) mit seiner mit dem Bord (5) ausgebildeten Stirnseite nach oben derart exzentrisch zum äußeren Lagerring (6) angeordnet wird, dass einerseits die Hilfsrampe (23) zwischen den Lagerringen (2, 6) angeordnet ist und andererseits um 180° zur Mitte der Hilfsrampe (23) versetzt die Lagerringe (2, 6) aneinander anliegen.

7. Verfahren nach Anspruch 6, **dadurch gekennzeichnet, dass** in einem dritten Schritt des Exzentermontageverfahrens der entstandene sichelförmige Freiraum zwischen dem inneren Lagerring (2) und dem äußeren Lagerring (6) mit den als Kegelrollen ausgebildeten Rollenwälzkörpern (10) derart befüllt wird, dass deren größere Stirnseiten auf der Schrägseite (27) der Hilfsrampe (23) aufliegen.

8. Verfahren nach Anspruch 4 oder 7, **dadurch gekennzeichnet, dass** in einem vierten Schritt des Exzentermontageverfahrens der äußere Lagerring (3) in Höhe des Berührungspunktes mit dem inneren Lagerring (2) sowie in Höhe eines dem Berührungspunkt um 180° versetzten Punktes an dessen Außenmantelfläche derart eingespannt wird, dass der äußere Lagerring (3) innerhalb seiner Elastizitätsgrenze geringfügig ovalisiert wird.

9. Verfahren nach Anspruch 8, **dadurch gekennzeichnet, dass** in einem fünften Schritt des Exzentermontageverfahrens der innere Lagerring (2) in eine koaxiale Lage zum äußeren Lagerring (3) verschoben wird und die Rollenwälzkörper (10) in ihren Laufbahnen (4, 8) in den Lagerringen (2, 6) unter Aufhebung der Ovalisierung des äußeren Lagerrings (3) gleichmäßig umfangsverteilt werden.

10. Verfahren nach Anspruch 9, **dadurch gekennzeichnet, dass** in einem sechsten Schritt des Exzentermontageverfahrens der als Kammkäfig ausgebildete Lagerkäfig (11) mit seinen Käfigstegen (13) zwischen die Rollenwälzkörper (10) von der Seite mit deren kleineren Stirnseiten her eingeführt und mit seinen Rastnasen an der Innenfläche des Bordes (5) am inneren Lagerring (2) verrastet wird.

11. Verfahren nach Anspruch 9, **dadurch gekennzeichnet, dass** in einem sechsten Schritt des Exzentermontageverfahrens der als Kammkäfig ausgebildete Lagerkäfig (11) mit seinen Käfigstegen (13) zwischen die Rollenwälzkörper (10) von der Seite mit deren größeren Stirnseiten her eingeführt und mit seinen Raststegen (14) an der Innenfläche (15) des Bordes (9) am äußeren Lagerrings (6) verrastet wird.

12. Verfahren nach Anspruch 11, **dadurch gekennzeichnet, dass** in einem siebten Schritt der Lagerinnenraum (20) mit Schmierstoff befüllt wird und die beiden Elastomerdichtscheiben (18, 19) in die umlaufenden Befestigungsnuten (16, 17) in der inneren Mantelfläche (7) des äußeren Lagerrings (6) eingesetzt werden.

13. Vorrichtung zur Durchführung des Verfahrens nach Anspruch 4, **dadurch gekennzeichnet, dass** die mit ihrer Innendurchmesserseite (24) am inneren Lagerring (2) anliegende Hilfsrampe (22) eine sich zum äußeren Lagerring (3) hin mit dem Neigungswinkel der Laufbahn (4) im inneren Lagerring (2) verjüngende Schrägseite (26) sowie eine maximale Rampenhöhe (h_{R}) aufweist, die der Bordhöhe (h_{BI}) am inneren Lagerring (2) entspricht.

14. Vorrichtung zur Durchführung des Verfahren nach Anspruch 7, **dadurch gekennzeichnet, dass** die mit ihrer Außendurchmesserseite (25) am äußeren Lagerring (6) anliegende Hilfsrampe (23) eine sich zum inneren Lagerring (2) hin mit dem Neigungswinkel der Laufbahn (8) im äußeren Lagerring (6) verjüngende Schrägseite (27) sowie eine maximale Rampenhöhe (h_{R}) aufweist, die der Bordhöhe (h_{BA}) am äußeren Lagerring (6) entspricht.

## Claims

1. A method for producing an angular-contact roller bearing (1) with rims (5, 9) that are limiting on one side, comprising the following method steps:
▪ incorporation, in a conical manner, of an inner raceway (4) in a section of an outer jacket surface (3) of an inner bearing ring (2) extending in a coaxial cylindrical manner to the bearing rotation axis (A_{L}), so that the inner raceway (4) is inclined with respect to the bearing rotation axis (A_{L}) and, at one end, is limited by a rim (5), while at the other end, being rimless, it abuts the outer jacket surface (3) of the inner bearing ring (2),
▪ incorporation, in a conical manner, of an outer raceway (8) in a section of an inner jacket surface (7) of an outer bearing ring (6) extending in a coaxial cylindrical manner to the bearing rotation axis (A_{L}) so that the outer raceway (8) is inclined with respect to the bearing rotation axis (A_{L}) and at one end is limited by a rim (9), while at the other end, being rimless, it abuts the inner jacket surface (7) of the outer bearing ring (6),
▪ assembly of the inner and outer bearing rings (2, 6) and a plurality of roller bearing elements (10) that roll on their raceways (4, 8) according to an eccentric mounting method known per se as a mounting method for deep groove ball bearings.

2. The method according to claim 1, **characterised in that,** in a first step of the eccentric mounting method, the inner bearing ring (2) with the end face thereof formed by the rim (5) is placed on a horizontal mounting plane (21) with a convex sickle-shaped auxiliary ramp (22), so as to bear with the rim (5) thereof on the inner diameter side (24) of the auxiliary ramp (22).

3. The method according to claim 2, **characterised in that,** in a second step of the eccentric mounting method, the outer bearing ring (6) with the end face thereof formed by the rim (9) is arranged upwards so as to be eccentric to the inner bearing ring (2) such that the auxiliary ramp (22) is arranged between the bearing rings (2, 6) and the bearing rings (2, 6) bear against each other being offset by 180° to the centre of the auxiliary ramp (22).

4. The method according to claim 3, **characterised in that,** in a third step of the eccentric mounting method, the resulting sickle-shaped free space between the outer bearing ring (6) and the inner bearing ring (2) is filled with the roller bearing elements (10) formed as tapered rollers such that the smaller end faces thereof rest on the inclined side (26) of the auxiliary ramp (22).

5. The method according to claim 1, **characterised in that,** in a first step of the eccentric mounting method, the outer bearing ring (6) with the end face thereof formed by the rim (9) is placed on a horizontal mounting plane (21) with a convex sickle-shaped auxiliary ramp (23), so as to bear with the rim (9) thereof on the outer diameter side (25) of the auxiliary ramp (23).

6. The method according to claim 5, **characterised in that,** in a second step of the eccentric mounting method, the inner bearing ring (2) with the end face thereof formed by the rim (5) is arranged upwards so as to be eccentric to the outer bearing ring (6), such that the auxiliary ramp (23) is arranged between the bearing rings (2, 6) and the bearing rings (2, 6) bear against each other being offset by 180° to the centre of the auxiliary ramp (23).

7. The method according to claim 6, **characterised in that,** in a third step of the eccentric mounting method, the resulting sickle-shaped free space between the inner bearing ring (2) and the outer bearing ring (6) is filled with roller bearing elements (10) formed as tapered rollers such that the larger end faces thereof rest on the inclined side (27) of the auxiliary ramp (23).

8. The method according to claim 4 or 7, **characterised in that,** in a fourth step of the eccentric mounting method, the outer bearing ring (3) is clamped at the height of the contact point with the inner bearing ring (2) and at the height of a point offset by 180° from the contact point, on the outer jacket surface thereof, such that the outer bearing ring (3) is slightly ovalised within its elastic limit.

9. The method according to claim 8, **characterised in that,** in a fifth step of the eccentric mounting method, the inner bearing ring (2) is displaced into a coaxial position with respect to the outer bearing ring (3) and the roller bearing elements (10) in the raceways (4, 8) thereof are distributed in the bearing rings (2, 6) in a uniform circumferential manner so as to cancel the ovalisation of the outer bearing ring (3).

10. The method according to claim 9, **characterised in that,** in a sixth step of the eccentric mounting method, the bearing cage (11) formed as a prong-type cage with the cage dividers (13) thereof introduced between the roller bearing elements (10) from the side with the smaller end faces thereof and being latched with the locking lugs thereof on the inner surface of the rim (5) on the inner bearing ring (2).

11. The method according to claim 9, **characterised in that,** in a sixth step of the eccentric mounting method, the bearing cage (11) formed as a prong-type cage with the cage dividers (13) thereof introduced between the roller bearing elements (10) from the side with the larger end faces thereof and being latched with the locking strips (14) thereof on the inner surface (15) of the rim (9) on the outer bearing ring (6).

12. The method according to claim 11, **characterised in that,** in a seventh step, the bearing interior (20) is filled with lubricant and the two elastomer sealing discs (18, 19) are inserted in the circumferential fastening grooves (16, 17) in the inner jacket surface (7) of the outer bearing ring (6).

13. A device for carrying out the method according to claim 4, **characterised in that** the auxiliary ramp (22), with its inner diameter side (24) bearing on the inner bearing ring (2), has an inclined side (26) tapered towards the outer bearing ring (3) with the inclination angle of the raceway (4) in the inner bearing ring (2) and a maximum ramp height (h_{R}) which corresponds to the rim height (h_{BI}) on the inner bearing ring (2).

14. A device for carrying out the method according to claim 7, **characterised in that** the auxiliary ramp (23), with its outer diameter side (25) bearing on the outer bearing ring (6), has an inclined side (27) tapered towards the inner bearing ring (2) (6) with the inclination angle of the raceway (8) in the outer bearing ring (6) and a maximum ramp height (h_{R}) which corresponds to the rim height (h_{BA}) on the outer bearing ring (6).

## Revendications

1. Procédé de fabrication d'un roulement à rouleaux à contact oblique (1) muni de bords de délimitation unilatérale (5, 9) comprenant les étapes de procédé suivantes, à savoir :
▪ la réalisation de manière conique d'un chemin de roulement intérieur (4) dans une partie d'une surface latérale extérieure (3), cylindrique s'étendant coaxialement par rapport à l'axe de rotation du roulement (A_{L}), d'une bague de roulement intérieure (2), de telle sorte que le chemin de roulement intérieur (4) soit incliné par rapport à l'axe de rotation du roulement (A_{L}) et délimité au niveau d'une extrémité par un bord (5), tandis qu'à l'autre extrémité, il est adjacent sans bord à la surface latérale extérieure (3) de la bague de roulement intérieure (2),
▪ la réalisation de manière conique d'un chemin de roulement extérieur (8) dans une partie d'une surface latérale intérieure (7), cylindrique s'étendant coaxialement par rapport à l'axe de rotation du roulement (A_{L}), d'une bague de roulement extérieure (6), de telle sorte que le chemin de roulement extérieur (8) soit incliné par rapport à l'axe de rotation de roulement (A_{L}) et délimité au niveau d'une extrémité par un bord (9), tandis qu'à l'autre extrémité, il est adjacent sans bord à la surface latérale intérieure (7) de la bague de roulement extérieure (6),
▪ le montage des bagues de roulement intérieure et extérieure (2, 6) ainsi que d'une pluralité d'éléments roulants sous forme de rouleaux (10) roulant sur leurs chemins de roulement (4, 8) selon un procédé de montage sur excentrique connu en soi comme un procédé de montage pour roulements à billes à gorges profondes.

2. Procédé selon la revendication 1, **caractérisé en ce que** dans une première étape du procédé de montage sur excentrique, la bague de roulement intérieure (2) avec sa face frontale formée par le bord (5) est placée sur un plan de montage horizontal (21) avec une rampe auxiliaire en forme de croissant convexe (22) de telle sorte que celle-ci repose avec son bord (5) sur le côté diamètre intérieur (24) de la rampe auxiliaire (22).

3. Procédé selon la revendication 2, **caractérisé en ce que** dans une deuxième étape du procédé de montage sur excentrique, la bague de roulement extérieure (6) avec sa face frontale formée par le bord (9) est disposée excentrée vers le haut par rapport à la bague de roulement intérieure (2), de telle sorte que, d'une part, la rampe auxiliaire (22) soit disposée entre les bagues de roulement (2, 6) et, d'autre part, les bagues de roulement (2, 6) soient disposées en contact l'une par rapport à l'autre décalées de 180° par rapport au centre de la rampe auxiliaire (22).

4. Procédé selon la revendication 3, **caractérisé en ce que,** dans une troisième étape du procédé de montage sur excentrique, l'espace libre en forme de croissant résultant entre la bague de roulement extérieure (6) et la bague de roulement intérieure (2) est rempli par les éléments roulants sous forme de rouleaux (10) formés comme des rouleaux coniques de telle sorte que leurs plus petites faces frontales reposent du côté incliné (26) de la rampe auxiliaire (22).

5. Procédé selon la revendication 1, **caractérisé en ce que** dans une première étape du procédé de montage sur excentrique, la bague de roulement extérieure (6) avec sa face frontale formée par le bord (9) est placée sur un plan de montage horizontal (21) avec une rampe auxiliaire en forme de croissant convexe (23), de telle sorte qu'elle repose avec son bord (9) sur le côté diamètre extérieur (25) de la rampe auxiliaire (23).

6. Procédé selon la revendication 5, **caractérisé en ce que** dans une deuxième étape du procédé de montage sur excentrique, la bague de roulement intérieure (2) avec sa face frontale formée par le bord (5) est disposée excentrée vers le haut par rapport à la bague de roulement extérieure (6), de telle sorte que, d'une part, la rampe auxiliaire (23) soit disposée entre les bagues de roulement (2, 6) et, d'autre part, les bagues de roulement (2, 6) soient disposées en contact l'une par rapport à l'autre décalées de 180° par rapport au centre de la rampe auxiliaire (23).

7. Procédé selon la revendication 6, **caractérisé en ce que,** dans une troisième étape du procédé de montage sur excentrique, l'espace libre en forme de croissant résultant entre la bague de roulement intérieure (2) et la bague de roulement extérieure (6) est rempli par les éléments roulants sous forme de rouleaux (10) formés comme des rouleaux coniques de telle sorte que leurs plus grandes faces frontales reposent du côté incliné (27) de la rampe auxiliaire (23).

8. Procédé selon la revendication 4 ou 7, **caractérisé en ce que,** dans une quatrième étape du procédé de montage sur excentrique, la bague de roulement extérieure (3) est serrée à hauteur du point de contact avec la bague de roulement intérieure (2) et à hauteur d'un point décalé du point de contact de 180° sur sa surface latérale extérieure, de telle sorte que la bague de roulement extérieure (3) soit légèrement ovalisée dans sa limite élastique.

9. Procédé selon la revendication 8, **caractérisé en ce que** dans une cinquième étape du procédé de montage sur excentrique, la bague de roulement intérieure (2) est déplacée dans une position coaxiale par rapport à la bague de roulement extérieure (3) et les éléments roulants sous forme de rouleaux (10) sont uniformément répartis sur la périphérie dans leurs chemins de roulement (4, 8) dans les bagues de roulement (2, 6), annulant l'ovalisation de la bague de roulement extérieure (3).

10. Procédé selon la revendication 9, **caractérisé en ce que,** dans une sixième étape du procédé de montage sur excentrique, la cage de roulement (11) en forme de cage à peignes est insérée avec ses éléments de liaison de cage (13) entre les éléments roulants sous forme de rouleaux (10) depuis le côté présentant ses plus petites faces frontales et est encliquetée avec ses pattes de blocage sur la surface intérieure du bord (5) sur la bague de roulement intérieure (2).

11. Procédé selon la revendication 9, **caractérisé en ce que,** dans une sixième étape du procédé de montage sur excentrique, la cage de roulement (11) en forme de cage à peignes est insérée avec ses éléments de liaison de cage (13) entre les éléments roulants sous forme de rouleaux (10) depuis le côté présentant ses plus grandes faces frontales et est encliquetée avec ses éléments de liaison d'encliquetage (14) sur la surface intérieure (15) du bord (9) sur la bague de roulement extérieure (6).

12. Procédé selon la revendication 11, **caractérisé en ce que** dans une septième étape, l'espace intérieur du roulement (20) est rempli de lubrifiant et les deux rondelles d'étanchéité en élastomère (18, 19) sont insérées dans les rainures de fixation périphériques (16, 17) dans la surface latérale intérieure (7) de la bague de roulement extérieure (6).

13. Dispositif pour la mise en œuvre du procédé selon la revendication 4, **caractérisé en ce que** la rampe auxiliaire (22) reposant avec son côté de diamètre intérieur (24) sur la bague de roulement intérieure (2), présente un côté incliné (26) se rétrécissant vers la bague de roulement extérieure (3) avec l'angle d'inclinaison du chemin de roulement (4) dans la bague de roulement intérieure (2), ainsi qu'une hauteur de rampe maximale (h_{R}), qui correspond à la hauteur de bord (h_{BI}) sur la bague de roulement intérieure (2).

14. Dispositif pour la mise en œuvre du procédé selon la revendication 7, **caractérisé en ce que** la rampe auxiliaire (23) reposant avec son côté de diamètre extérieur (25) sur la bague de roulement extérieure (6), présente un côté incliné (27) se rétrécissant vers la bague de roulement intérieure (2) avec l'angle d'inclinaison du chemin de roulement (8) dans la bague de roulement extérieure (6), ainsi qu'une hauteur de rampe maximale (h_{R}), qui correspond à la hauteur de bord (h_{BA}) sur la bague de roulement extérieure (6).
